# EUROPEAN PATENT APPLICATION

(11) **EP 1 675 051 A1**
(43) Date of publication of application: **28.06.2006**
(21) Application number: 05027761.5
(22) Date of filing: 19.12.2005
(51) Int. Cl.: G06Q 10/00

(54) **Recipient preference mail communications service**

(30) Priority: 23.12.2004 US 22415
(71) Applicant: Pitney Bowes, Inc., Stamford, CT 06926-0700 (US)
(72) Inventor: Stemmle, Denis J., Stratford Connecticut 06614 (US); Braun, John F., Fairfield Connecticut 06824 (US); Pintsov, Leon A., West Hartford Connecticut 06117 (US)
(74) Representative: HOFFMANN EITLE

(57) **Abstract**

A method for communicating mailing preferences of a mail recipient including a messenger for use in connection with an unsolicited mail piece received by a mail recipient. The messenger functions to communicate a mailing preference to the sender of the unsolicited mailpiece that the mail recipient desires some change regarding future unsolicited mail communications from the sender. The mailing preference may include an instruction to discontinue future mail communications from the sender. The messenger may be affixed in combination with the unsolicited mailpiece and re-introduced into the mail distribution system by the mail recipient. Further, the messenger may be mailed to and received by a mail service provider to act on behalf of the mail recipient for the purpose of communicating the mailing preference or instruction to the sender.

## Description

This invention relates generally to methods for improved mail distribution, and more particularly, to a mail distribution system which reduces the number of unwanted/unsolicited mail to recipients.

Traditionally, recipients (i.e., individuals, businesses and households) have had little opportunity to influence the number and/or type of mail that is received. Merely having a post office address has served as an open invitation to persons/companies desiring to communicate with the recipient. With the constant influx of unsolicited mail, the recipient can become desensitized to mail communications which are important to receive or desired by the mail recipient. Hence, it is common for such recipients to inadvertently discard important pieces of mail (i.e., the receipt of a credit card) believing them to be one of the many unsolicited mailpieces received on a daily basis.

While recipients are often frustrated by the plethora of mailpieces they receive, senders, on the other hand, would prefer to limit their mailings to a targeted audience of recipients most likely to respond in order to reduce mailing expenses while increasing yield (i.e., the number or recipients responding in a positive manner to the sender's messages). Without more information/communication from the recipients, the senders understand little about the messaging preferences of the recipients and their interests. Consequently, this dichotomy results in millions of unwanted/unsolicited mail pieces being discarded without being opened, depletes our natural resources (e.g., wood for paper) and places an increased burden on our environment (filling landfills and taxing recycling efforts).

Many factors place increased demands on the efficacy and effectiveness of mail communications by senders of unsolicited mail (e.g., mass mailings). For example, senders must compete for the mail recipient's attention due to the large influx of mail communications received daily. If the mail communication can not be comprehended or does not generate interest, it is probable that the mail recipient will move on to more important mail communications which may require their attention or action (e.g., their heating or lighting bill).

Inflation and other factors are constantly increasing the cost of the mail. Hence, the value of mail communications must be weighed against other, more targeted methods of communication (e.g., an advertisement in a magazine having an audience of readers which are most likely to purchase the consumer product). In an effort to support these activities and reduce the mailing costs, mail service providers (i.e., companies which augment or facilitate the delivery of mail, whether delivered by the US Postal Service or some commercial distribution mail service) now offer services which attempt to consolidate mass mailed messages/advertisements. Such consolidation is designed to take optimum advantage of discounts offered by the Postal service for bulk or volume delivery of mail. For example, a scheduled mass mailing of a golf resort advertisement may be well-suited for combination with a mass mailing of an advertisement for golf clubs. Consequently, through the consolidation services of the mail service provider, each party obtains fiscal advantages by sharing the mailing expenses.

Commonly-owned International Patent Publication Number WO 01/95060 entitled INFORMATION DELIVERY SYSTEM FOR PROVIDING SENDERS WITH A RECIPIENT'S MESSAGING PREFERENCES, and U.S. Patent No. 6,640,773 entitled RECIPIENT CONTROL OVER ASPECTS OF INCOMING MESSAGES, both address issues surrounding the control of incoming messages and methods for improving the effectiveness thereof. While these solutions offer significant improvement, each requires the use of various electronic devices, e.g., personal computers, web servers, etc.) which are not accessible to or in all households. Furthermore, to the extent that such delivery systems require the use of a computer to access these systems, the user must turn the computer on, wait while the computer processes its startup programs, log onto a web site, enter user profile information, etc.

Therefore, due to the foregoing, the recipients/senders are relegated to receiving/sending large volumes of mailpieces to ensure that a handful of interested recipients receive the mailpieces they desire or welcome.

A need, therefore, exists for a simple system designed to limit the amount of unwanted/unsolicited mail while, at the same time, providing fiscal advantages for the sender of the mailpiece, the delivery agent, and the mail services provider.

The present invention provides a mail delivery system which reduces the number and/or type of unwanted and unsolicited mail received by recipients. The method does not rely on the use of electronic devices or other communication devices and can be employed within the current mail distribution infrastructure.

In accordance with the present invention, the mail delivery system employs a messenger for use in connection with an unsolicited mailpiece received by a mail recipient. The messenger functions to communicate a message to the sender of the unsolicited mailpiece that the recipient desires some change regarding future unsolicited mailings from the sender. The preference may include an instruction to discontinue future mail communications from the sender. In the preferred embodiment of the invention, the messenger is disposed in combination with the unsolicited mailpiece and re-introduced into the mail distribution system by the mail recipient to communicate the mailing preference to the sender. Furthermore, a mail service provider may be employed to act on behalf of the mail recipient for the purpose of communicating this preference to the sender.

Therefore, it is now apparent that the present invention substantially overcomes the disadvantages associated with the prior art. Additional advantages of the invention will be set forth in the description that follows, and in part will be obvious from the description, or may be learned by practice of the invention. The objects and advantages of the invention may be realized and obtained by means of the instrumentalities and combinations particularly pointed out in the appended claims.

The accompanying drawings, which are incorporated in and constitute a part of the specification, illustrate presently preferred embodiments of the invention, and together with the general description given above and the detailed description of the preferred embodiments given below, serve to explain the principles of the invention. As shown throughout the drawings, like reference numerals designate like or corresponding parts.

Fig. 1 is a schematic illustration of a mail delivery system including a messenger, a delivery agent, a mail services provider and various companies desiring to communicate by mail with a mail recipient.

Fig. 2 is a pictorial representation of the messenger in the form of a booklet having a plurality of pre-printed, pre-paid labels for being affixed in combination with an unsolicited mailpiece.

Fig. 3 is a pictorial representation an unsolicited mailpiece having a messenger affixed to a front face thereof wherein the previous mailing address is occluded or covered by the messenger.

Fig. 4 is a flow diagram of various steps for practicing the inventive method.

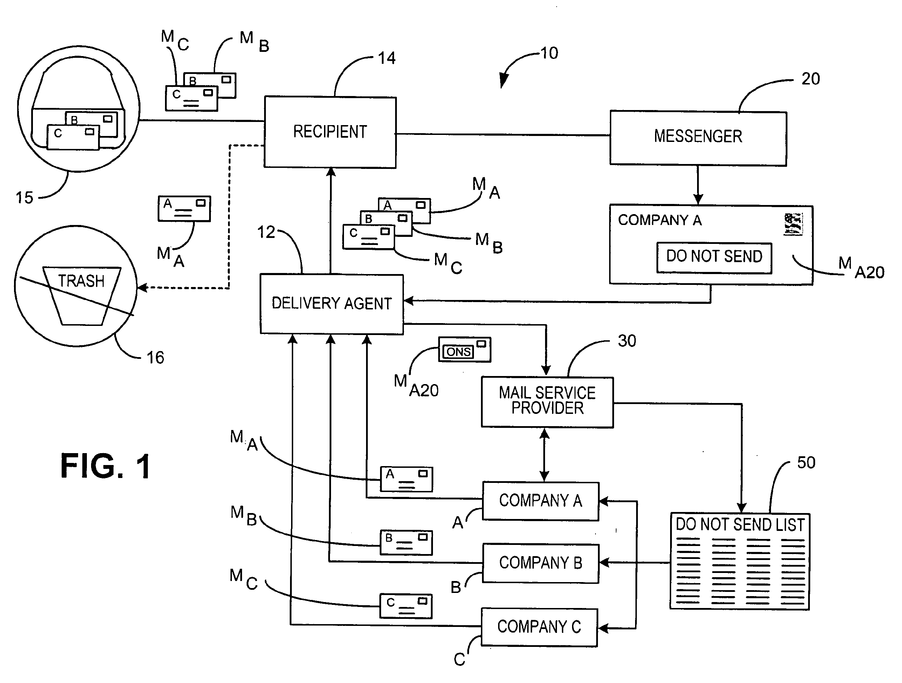

Referring to Fig. 1, an exemplary mail distribution system 10 in which the present invention may be incorporated is shown. The mail distribution system 10 includes a delivery agent or mail carrier 12 for conveying/transporting mailpieces M_{A}, M_{B} & M_{C} from companies A, B & C, respectively to a mail recipient 14. While the mail distribution system 10 serves to deliver mail to mail recipients 14 expecting to receive such mail communications, it also is used at a vehicle to communicate messages to a large, audience of potentially interested customers or like-minded individuals having similar interests and preferences. Such mail communications are principally unsolicited. As previously discussed in the Background of the Invention. many of these unsolicited mail communications are, depending upon the interests, desires and preferences of the mail recipient, unimportant, unnecessary and/or unwelcome. In the context used herein, "mail distribution system" means any governmental authority or commercial entity, empowered or authorized to handle and deliver mail from a sender to a recipient.

Upon receipt of the various mailpieces M_{A}, M_{B} & M_{C}, the mail recipient 14 determines that mailpieces M_{B} and M_{C} are expected/important mail communications and are stored in an in-basket 15 for retention. Further, the mail recipient 14 notices that one of the mailpieces M_{A} is from a Company A desiring to interest the mail recipient in a product offering. In the prior art, if the mail recipient was disinterested in the offering, the mail recipient 14 would discard the mailpiece M_{A} and its contents in the trash 16, hoping that Company A would discontinue sending future mail communications.

In contrast to the prior art, the present invention employs a messenger 20 to enable the mail recipient 14 to communicate a mailing preference or instruction regarding future mail communications with Company A. In the context used herein, a "mailing preference" is any instruction or request to change the flow of mail from the sender to the mail recipient. Common examples may include changes to the frequency of communication (including discontinuation of mail communications), times of the year that mail communications are to be conducted (e.g., only during the December holidays) or subject matter such as a request to send catalogues on camping and other outdoor activities.

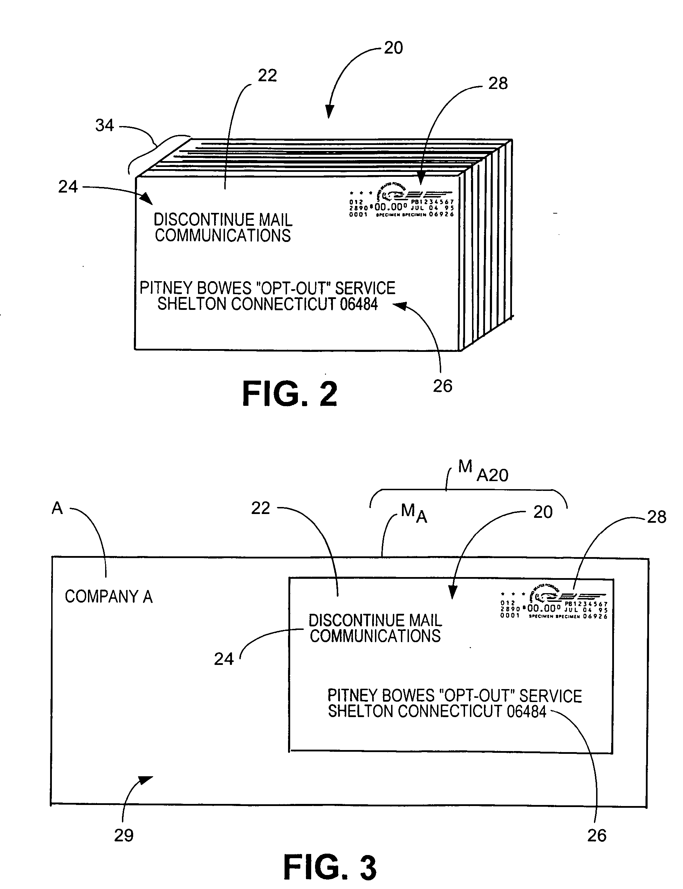

The messenger 20 may take a variety of forms and, in the broadest sense of the invention, is any physical manifestation of a mailing preference or instruction which may be read or otherwise understood by its recipient (which as will be discussed hereinafter, may be the original sender of the unsolicited mailpiece or a mail service provider). In one embodiment, and referring to Figs. 2 and 3, the messenger 20 may take the form of a label 22 and a means for affixing the label 22 directly to the unsolicited mailpiece M_{A} for re-introduction into the mail distribution system 10. As used herein, the attachment means includes, but is not limited to, adhesives, tape, paper interlock, pins, clips, folds or other fasteners. Furthermore, the messenger may take the form of an envelope (not shown) for containing the unsolicited mailpiece therein. In yet another embodiment, the messenger may be a stand alone document (also not shown) resembling a conventional postcard.

Further, the messenger 20 includes a means for conveying at least one mailing preference 24 to the sender of the unsolicited mailpiece M_{A}. The mailing preference 24 may be communicated by any one of a variety of message conveying words, codes, indicia, or symbology. For example, the mailing preference 24 may be pre-printed, or printed by the mail recipient in a designated region, on the face of the label 22. Additionally, the mail preference 24 may be checked off from a list of preference options pre-printed on the face of the messenger 20. Alternatively, a mailing preference may be conveyed by simple color coded labels, e.g., red being indicative of an instruction to "stop" future mail communications. Those skilled in the art of form or label design will readily appreciate a multiplicity of alternate embodiments falling within the means for conveying a mailing preference.

In the described embodiment, the messenger 20 is affixed to the face 29 of the mailpiece M_{A} so as to conceal or cover the recipient's mailing address as printed on the original mailpiece M_{A} by the sender Company A. To facilitate reading of the concealed address, the messenger 20 may include a portion which is easily removable to view the previous mailing address, e.g., a perforated flap or window.

In this embodiment, the messenger 20 includes contact information 26 of the mail service provider 30 operating in a liaison capacity between the mail recipient 14 and the sender, Company A.

Additionally, the messenger 20 may include prepaid postage 28 to further facilitate and promote its use. Inasmuch as postal authorities typically provide discounts on mailpieces containing machine readable, i.e., via electronic scanning), the messenger 20 may also have barcode indicia or other identifier to facilitate its delivery and handling within the mail distribution system. As such, the cost of mailing the modified mailpiece M_{A20} may be substantially reduced.

The discussion supra has described, the messenger 20 for use in connection with an unsolicited mailpiece M_{A} and operative to convey the mailing preference to the sender Company A. The following discussion will emphasize the import and use of the messenger 20 in connection with a method for limiting the dissemination and delivery of unsolicited mailpieces in a mail distribution system.

The inventive method addresses the difficulty that a mail recipient 14, unfamiliar with various aspects of mail distribution, may experience in an effort to alter the course of future mail communications from a sender. Consequently, due their involvement in an array of specialized mail-related services, mail service providers are acknowledged to have greater access to and, perhaps, influence with respect to such senders. Consequently, such mail service providers 30 are uniquely qualified to act in a liaison capacity and are well-suited to effect the desired mail communication changes. Therefore, it will be appreciated that the mail service provider 30 serves to promote and enable the desired mail preferences.

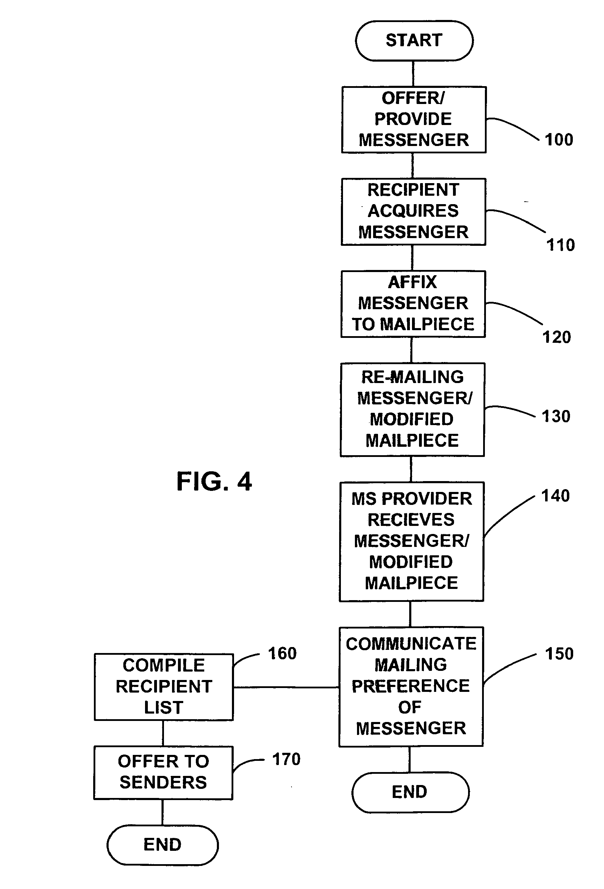

In an initial step 100, and referring to Figs. 1-4, the mail service provider 30 offers or provides the messengers 20 to mail recipients 14 desiring to have certain mail preferences followed in connection with the receipt of unsolicited mail communications. The messengers 20 may be offered individually or in a merchandisable packet, sheet, or booklet 34. The booklet 34 comprises a plurality of messengers 20, each in label format and bound along one edge. Each messenger 20 includes preprinted contact information 26 in connection with the mail service provider 30 and a printed mail preference 24. Optionally, several types of packets, sheets, or booklets could be fabricated and arranged, each being dedicated to a particular mailing preference 24. In the embodiment illustrated in Fig. 3, the mailing preference 24 of the messenger 20 is an instruction to discontinue or stop future mail communications. The color of each messenger 20 may, additionally or alternatively, be red for increased emphasis or to ensure the message is not misinterpreted or misread.

In step 110, mail recipient 14 acquires, whether by purchase or other means, the mail preference messengers 20. In the preferred embodiment, the purchase price of the booklet 34 will include prepaid postage 28 and a nominal fee for the mail service provider 30 act on behalf of the mail recipient 14.

In step 120, upon receipt of the unsolicited mailpiece M_{A} from Company A, the mail recipient 14 affixes the messenger 20, as previously described, in combination with the mailpiece M_{A}. Inasmuch as the messenger contains contact information, i.e., of the mail service provider, includes prepaid postage 28 and contains a mailing preference instruction 24, the now modified mailpiece is ready for mailing. In step 130, the mail recipient 14 then re-introduces the mailpiece into the mail distribution system for delivery.

In step 140, the mail service provider 30 receives the modified mailpiece M_{A20} from the delivery agent 12. Upon receipt of the modified mailpiece M_{A20}, the mail service provider 30, having determined the intent of the mail recipient 14 from the messenger 20, proceeds, in step 150 to communicate the mailing preference 24 to the sender Company A. This communication step may be conducted in any of a variety of methods, including forwarding the messenger 20 to the sender, or otherwise contacting the sender via electronic communication devices such as e-mail, facsimile or telephone. Alternatively, mail service providers 30 may collect numerous messengers from numerous recipients 14 before forwarding the preferences to parties of interest which may include mail senders or address list providers. While the sender Company A will be under no obligation to honor the mailing preference of the mail recipient 14, it is logical to conclude that Company A will not continue mail communications to a disinterested mail recipient 14.

In step 160, the mail service provider 30 is in a unique position to gather mail preference data and, in step 170, offer a list of mail recipients 50 (see Fig. 1) to senders. That is, senders interested to know the preferences of mail recipients can use this data to avoid sending mail, and the cost associated therewith, to disinterested mail recipients. The result of the foregoing method is to narrow the field of potential customers for companies such that they can target an audience more cost effectively when conducting mail communications.

In summary, the inventive method reduces the number of unsolicited mail communications in a mail distribution system, thereby decreasing the time required by mail recipients to read and examine incoming mail correspondence. Further, a reduction in unsolicited mailpiece volume provides enhanced effectiveness of other mail communications in the mail distribution system.

In addition to providing logistic/workload benefits, the method of the present invention provides fiscal advantages for mail service providers, senders of unsolicited mailpieces and, potentially, delivery agents. Mail service providers benefit from the revenue derived from (i) offering packets, sheets or booklets of mail preference messengers, and (ii) the sale of mail preference lists to those desiring to modify there mailing lists. Senders of unsolicited mail can avoid the cost of mailing to disinterested mail recipients and focus efforts on a smaller audience. Inasmuch as the mail recipient re-introduces the unsolicited mailpiece into the mail distribution system, a higher volume of mail is handled, and consequently higher revenues received, by the delivery agent. It should be appreciated that the aim of the present invention is to reduce the volume of NEW UNSOLICITED mail not to reduce the overall volume of mail. In fact, the overall volume may increase appreciably. That is, as mail communications increase in the percentage of mailpieces having content desired by mail recipients, such communications can become the preferred vehicle for communicating messages by both mailers and mail recipients.

Finally, mail recipients and environmentalists can rejoice in the positive effects that a lower volume of undesired mail communications will have on the environment, That is, the demand for wood pulp is decreased, the volume of waste is reduced and the by-products of recycling diminished.

While, in the preferred embodiment, a mail service provider is best suited to provide or offer the messenger to mail recipients, a variety of interested parties may offer provide the messenger. For example, the postal authority, having an interest in affecting the quantity of mail it delivers, may make a messenger available to mail recipients.

Based on the above description and the associated drawings, it should now be apparent that the present invention improves many aspects of the exchange of messages between senders and recipients by facilitating the delivery of recipient preference information to senders.

Many features of the preferred embodiment represent design choices selected to best exploit the inventive concept as implemented in a particular messaging environment as pertaining to individual private recipients. However, those skilled in the art will recognize that various modifications can be made without departing from the spirit of the present invention to adapt the concepts of the present invention to address situations where the recipient is a business.

## Claims

1. A method for communicating mailing preferences of a mail recipient, comprising the steps of:
providing a messenger for use in connection with an unsolicited mailpiece received by the mail recipient, the messenger including at least one mailing preference of the mail recipient of the unsolicited mailpiece,
receiving the messenger from the mail recipient through a mail distribution system, and
communicating the mailing preference of the messenger to the sender of the unsolicited mailpiece.

2. The method according to claim 1 further comprising the steps of:
authorizing a mail service provider to act on behalf of the mail recipient in connection with communicating the mailing preference to the sender, and
mailing the messenger to the mail service provider.

3. The method according to claim 2 further comprising:
compiling a list of mail recipients having similar mailing preferences, and
offering the list of mail recipients to senders.

4. The method according to any preceding claim wherein the messenger is disposed in combination with the unsolicited mailpiece.

5. The method according to any preceding claim wherein the messenger includes contact information of the mail service provider.

6. The method according to any preceding claim wherein the messenger includes contact information of the sender.

7. The method according to claim 5 or 6 wherein the contact information is machine readable.

8. The method according to any preceding claim wherein the messenger is a label for being affixed to a face of the unsolicited mailpiece.

9. The method according to any one of claims 1 to 7 wherein the messenger is an envelope for containing the unsolicited mailpiece.

10. The method according to any preceding claim wherein the step of providing a messenger further includes the steps of:
fabricating and arranging a plurality of messengers,
offering the messengers to mail recipients.

11. The method according to any preceding claim wherein the messenger includes pre-paid postage.

12. The method according to any preceding claim wherein the mailing preference is an instruction to discontinue future mail communications with the sender.

13. The method according to any preceding claim further comprising the step of:
affixing the messenger to the mailpiece so as to occlude a mailing address on the unsolicited mailpiece.

14. A messenger for use in a method for limiting the dissemination and delivery of unsolicited mail in a mail distribution system, the messenger comprising:
one of an envelope and a label for being disposed in combination with an unsolicited mailpiece,
contact information of a mail service provider,
means for communicating a mailing preference to a sender of an unsolicited mailpiece.

15. The messenger according to claim 14 wherein the label has an adhesive backing for being affixed to a front face of the unsolicited mailpiece.

16. The messenger according to claim 14 or 15 wherein the label includes prepaid postage.

17. The messenger according to claim 14, 15 or 16 wherein a plurality of one of the envelopes and labels are arranged to form a merchandisable package.

18. The messenger according to any one of claims 14 to 17 wherein the contact information is machine readable.

19. The messenger according to any one of claims 14 to 18 wherein the mailing preference is an instruction to discontinue future mail communications with the sender.
